# EUROPEAN PATENT APPLICATION

(11) **EP 4 335 331 A1**
(43) Date of publication of application: **13.03.2024**
(21) Application number: 22020529.8
(22) Date of filing: 02.11.2022
(51) Int. Cl.: A47J 31/30, A47J 31/58

(54) **SELF-TENDING COFFEE MAKER**

(30) Priority: 06.09.2022 US 202217903348
(71) Applicant: Strategic Exits LLC, Incline Village, NV 89450 (US)
(72) Inventor: WEBER, Douglas, Incline Village, NV 89451 (US)
(74) Representative: Clarke, Geoffrey Howard

(57) **Abstract**

A coffee maker (100) is disclosed comprising: a top pot (104); a bottom pot (106) opposing the top pot; a funnel (112) disposed between the top pot and bottom pot; a base (114) disposed about the bottom pot; and a lifting means (116) for lifting the bottom pot (106) away from the base (114).

## Description

### BACKGROUND

The present disclosure relates generally to coffee makers and particularly to those commonly referred to as moka pots.

### SUMMARY

The disclosed subject matter is a self-tending coffee maker comprising a top pot, a bottom pot, a funnel disposed between the top pot and bottom pot, a base disposed about the bottom pot, and a means for lifting the bottom pot away from the base. In one exemplary embodiment, the lifting means comprises a pneumatically actuated piston having a piston rod. The pneumatically actuated piston is slideably disposed within a piston sleeve fitted within a piston chamber cut within the bottom pot. A spring having a biasing force is disposed between the piston sleeve and the piston rod. The lifting means is activated at a critical pressure inside the bottom pot wherein pressure against the piston overcomes the biasing force of the spring. The lifting means then causes the piston rod to push downward against the base to create an air gap between the bottom pot and the base. An optional adjustment screw may be in communication with the piston for creating a pre-load setting against the spring.

Instead of a pneumatically actuated piston arrangement, the lifting means may comprise a "sealed-cup" arrangement. With this arrangement, the coffee maker includes a fill channel, a seal in communication with the fill channel, and an inlet valve cut into the bottom pot and in communication with the fill channel. Activation of the lifting means creates an air gap between the bottom pot and the base as air flows from the inlet valve through the fill channel. With this arrangement, a stopper may be disposed between the base and the bottom pot to prevent the bottom pot from separating completely from the base.

The stopper may be adjustable to limit how far the bottom pot is lifted away from the base during activation. With this arrangement, the coffee maker may further comprise an air gate in communication with the inlet valve, wherein the air gate has an open position and a closed position. The air gate preferably includes a depressible ram having a spring biasing the ram into the closed position. Activation of the lifting means places the air gate into the open position to create the air gap. The bottom pot may include an air return inlet to permit air to enter back into the bottom pot after activation of the lifting means. The air gate may also have a rotatable screw in communication with the depressible ram to adjust when the lifting means may be activated.

In an alternative arrangement, the coffee maker may comprise an output opening cut into the bottom pot, wherein the lifting means comprises a fill cavity having a first end and an opposing second end, a valve in communication with the first end of the fill cavity, and a seal in communication with the second end of the fill cavity. Activation of the lifting means opens the valve to create an air gap between the bottom pot and the base, wherein the air gap is in communication with the fill cavity and the output opening.

In another arrangement, the lifting means may comprise a conduction plate and a seal, wherein the plate is fitted within the base, and wherein the seal is disposed between the plate and the base. Activation of the lifting means creates an air gap between the bottom pot and the base. This coffee maker may further comprise an adjustable magnet disposed between the plate and the bottom pot, wherein the base is ferromagnetic.

The lifting means may alternatively comprise a memory alloy disposed between the bottom pot and the base, wherein activation of the lifting means creates an air gap between the bottom pot and the base. In yet another alternative, the lifting means may include a portion of the base having a higher thermal expansion coefficient material compared to material comprising the bottom pot.

In another arrangement, the lifting means may comprise a hermetically sealed gas cavity within the bottom pot, and a piston in communication with one end of the cavity and the base. Activation of the lifting means pushes the piston toward the base to create an air gap between the bottom pot and the base.

In yet another arrangement, the lifting means may comprise a cavity within the bottom pot, a bi-metal spring enclosed within the cavity, and a piston in communication with the cavity and the base. The cavity has a first end and an opposing second end, wherein the bi-metal spring is disposed between the first end of the cavity and the piston. Activation of the lifting means pushes the bottom pot away from the base to create an air gap between the bottom pot and the base.

In another arrangement, the coffee maker may further include a heating element disposed within the bottom pot. This heating element is in electrical communication with a power element in the base. The lifting means comprises a cavity within the bottom pot, and a spring-biased piston in communication with the cavity and the base. Activation of the lifting means pushes the bottom pot away from the base to create an air gap between the bottom pot and the base. Doing so also stops electrical communication between the heating element and the base.

In another arrangement, the coffee maker may further include a heating element disposed within the bottom pot, wherein the heating element is in electrical communication with a power element having a trigger switch in the base. The lifting means comprises a cavity within the bottom pot, and a spring-biased piston in communication with the cavity and the trigger switch. Activation of the lifting means engages the trigger switch to stop power being provided to the heating element.

In a variant of the pneumatically actuated piston arrangement, the lifting means may further include retaining screw in communication with the piston rod for creating a pre-load setting against the spring, wherein the retaining screw is coupled to the base. With this set-up, the funnel preferably includes at least two legs in communication with the top pot. The legs are hollow as they serve as the conduit for heated water to pass through the funnel and then into the coffee grounds. Such a configuration advantageously permits the funnel itself to be self-standing.

### BRIEF DESCRIPTION OF THE DRAWINGS

Some non-limiting exemplary embodiments of the disclosed subject matter are illustrated in the following drawings. Identical or duplicate or equivalent or similar structures, elements, or parts that appear in one or more drawings are generally labeled with the same reference numeral, optionally with an additional letter or letters to distinguish between similar objects or variants of objects, and may not be repeatedly labeled and/or described. Dimensions of components and features shown in the figures are chosen for convenience or clarity of presentation. For convenience or clarity, some elements or structures are not shown or shown only partially and/or with different perspective or from different point of views.
Figure 1 is a perspective view of an exemplary embodiment disclosed herein, showing the device in an exemplary working environment;
Figure 2A is a perspective, cut-away view of the device seen in Figure 1, showing the device without coffee grounds in the funnel or water in the bottom pot;
Figure 2B is an exploded view of the device seen in Figure 2A;

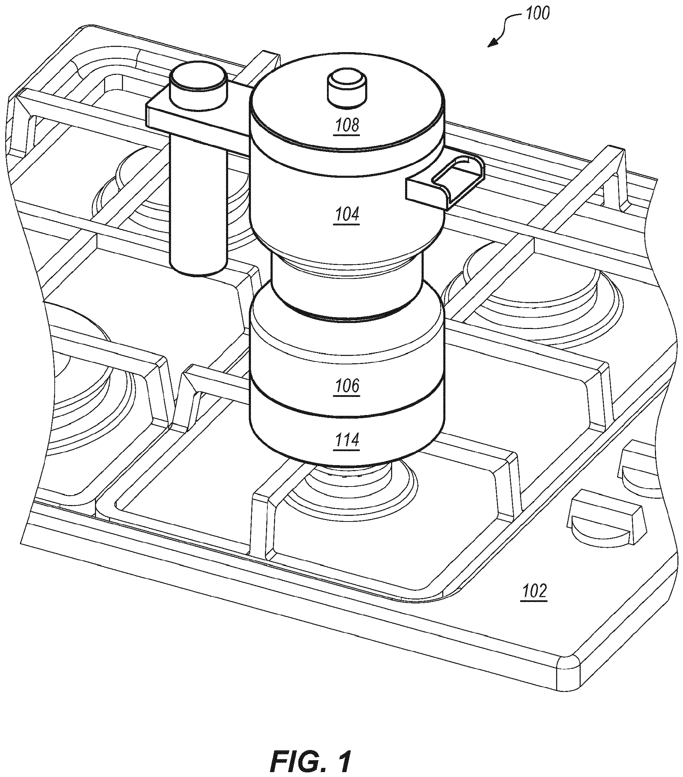

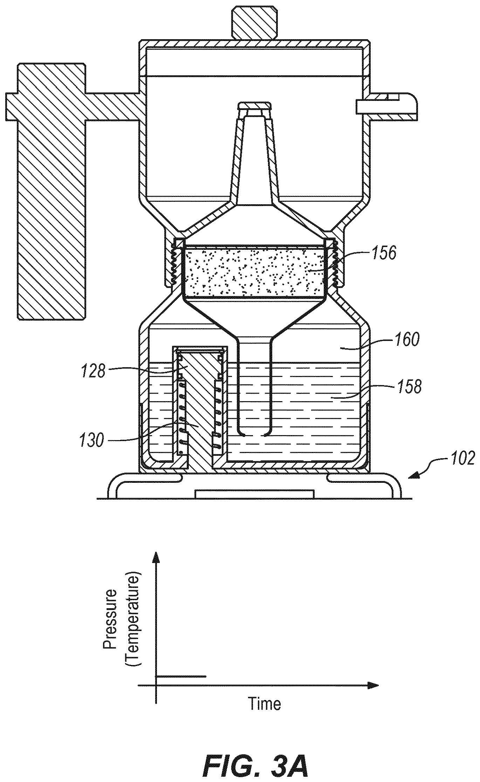

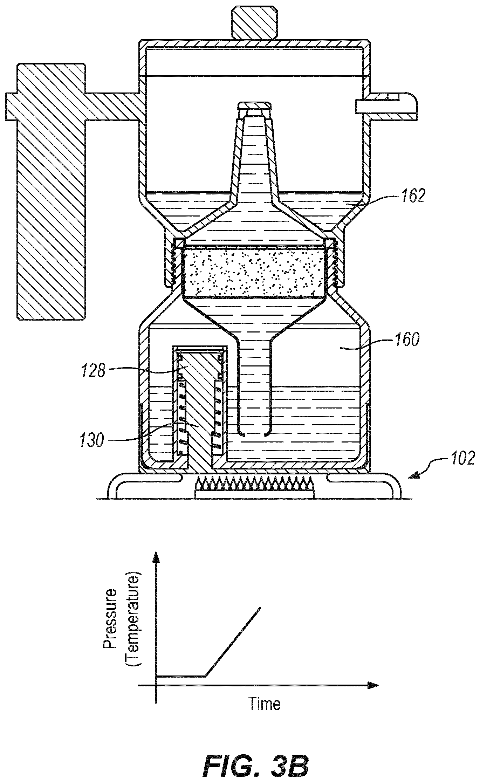

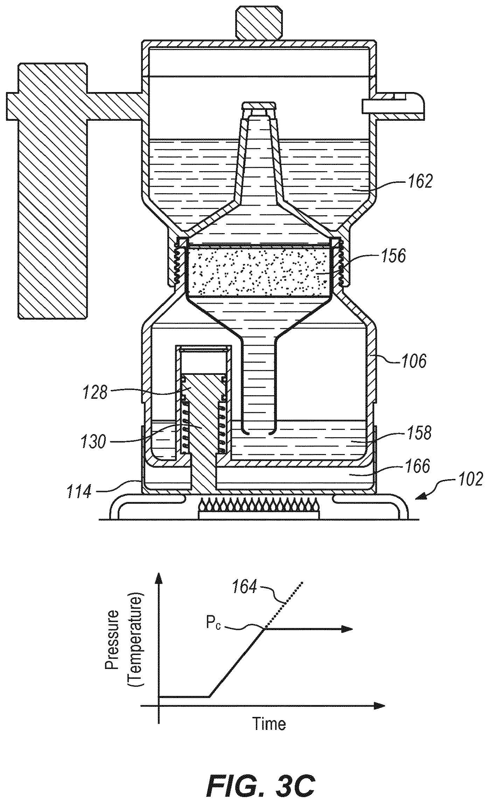

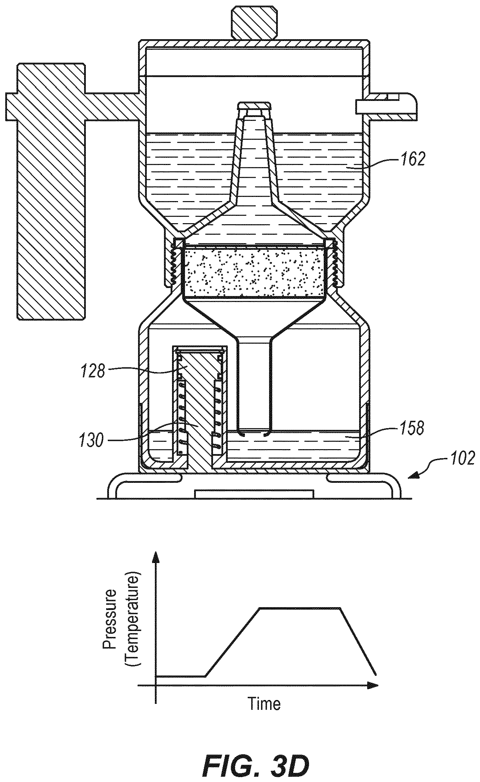

Figures 3A-3D show the device in Figure 1 in operation with their corresponding pressure (temperature) and time graphs under each, wherein Figure 3A illustrates the device after the user has filled it with water and coffee grounds; Figure 3B illustrates the user has added heat to the device, causing coffee to start to come out; Figure 3C illustrates additional heating and the pressure versus time graph illustrates the amount of pressure with and without the exemplary embodiment over time; and Figure 3D illustrates the final aspects of the brew cycle and the pressure versus time graph illustrates the decrease in pressure with the exemplary embodiment over time;
Figures 4A-4B show modifications to the device seen in Figure 1, wherein Figure 4A illustrates this device after the user has filled it with water and coffee grounds, and wherein Figure 4B illustrates this device in operation;
Figures 5A-5B illustrate an alternative structural arrangement to the device seen in Figure 1, wherein Figure 5A illustrates this device after the user has filled it with water and coffee grounds, and wherein Figure 5B illustrates this device in operation;
Figures 6A-6B show modifications to the device seen in Figure 1, wherein Figure 6A illustrates this device after the user has filled it with water and coffee grounds, and wherein Figure 6B illustrates this device in operation;
Figures 7A-7B show modifications to the device seen in Figures 5A-5B, wherein Figure 7A illustrates this device after the user has filled it with water and coffee grounds, and wherein Figure 7B illustrates this device in operation;
Figures 8A-8B illustrate an alternative structural arrangement to the devices seen in Figure 1 and Figures 5A-5B, wherein Figure 8A illustrates this device after the user has filled it with water and coffee grounds, and wherein Figure 8B illustrates this device in operation;
Figures 9A-9B illustrate an alternative embodiment, wherein the design is an add-on accessory to a conventional moka pot, wherein Figure 9A illustrates this device after the user has filled it with water and coffee grounds, and wherein Figure 9B illustrates this device in operation;
Figures 10A-10B illustrate an alternative structural arrangement to the device seen in Figures 9A-9B, wherein Figure 10A illustrates this device after the user has filled it with water and coffee grounds, and wherein Figure 10B illustrates this device in operation;
Figures 11A-11B show modifications to the device seen in Figures 5A-5B, wherein Figure 11A illustrates this device after the user has filled it with water and coffee grounds, and wherein Figure 11B illustrates this device in operation;
Figures 12A-12B show modifications to the device seen in Figures 11A-11B, wherein Figure 12A illustrates this device after the user has filled it with water and coffee grounds, and wherein Figure 12B illustrates this device in operation;
Figures 13A-13B illustrate an alternative embodiment, wherein Figure 13A illustrates this device after the user has filled it with water and coffee grounds, and wherein Figure 13B illustrates this device in operation;
Figures 14A-14B show modifications to the device seen in Figures 13A-13B, wherein Figure 14A illustrates this device after the user has filled it with water and coffee grounds, and wherein Figure 14B illustrates this device in operation;
Figures 15A-15B illustrate an alternative embodiment similar to those seen in Figures 13A-14B, wherein Figure 15A illustrates this device after the user has filled it with water and coffee grounds, and wherein Figure 15B illustrates this device in operation;
Figures 16A-16B illustrate an alternative structural arrangement to the device seen in Figure 1, wherein Figure 16A illustrates this device after the user has filled it with water and coffee grounds, and wherein Figure 16B illustrates this device in operation;
Figures 17A-17B show modifications to the device seen in Figures 16A-16B, wherein Figure 17A illustrates this device after the user has filled it with water and coffee grounds, and wherein Figure 17B illustrates this device in operation;
Figures 18A-18B illustrate an alternative embodiment, wherein Figure 18A illustrates this device after the user has filled it with water and coffee grounds, and wherein Figure 18B illustrates this device in operation;
Figures 19A-19B illustrate an alternative structural arrangement to the device seen in Figure 1, wherein Figure 19A illustrates this device after the user has filled it with water and coffee grounds, and wherein Figure 19B illustrates this device in operation;
Figures 20A is a perspective, cut-away view of yet another exemplary embodiment disclosed herein;
Figure 20B is an exploded view of the device seen in Figure 20A; and
Figures 21A-21H show the device seen in Figures 20A-20B in operation.

### DETAILED DESCRIPTION

When Italian engineer Alfonso Bialetti first introduced the moka pot in 1933, it did not take long for his coffee maker to become a staple of Italian culture. Today, the moka pot is used throughout the world, most commonly in Europe and Latin America.

Almost a century later, the moka pot has remained largely unchanged in its design. The beauty and simplicity of its look is iconic and considered by many to be a work of art befitting its place in industrial art and design museums.

Just as the aesthetics of the moka pot have been largely evolution-proof, so has its functionality. In broad strokes, a moka pot brews coffee by passing hot water through grounds via steam pressure. Such brewing is accomplished via relatively few components, namely, a bottom chamber, an opposing collecting chamber, and a funnel in communication with a dispensing column disposed between the two chambers.

In operation, a user typically fills the bottom chamber with water, fills the funnel with ground coffee, places the moka pot on a stovetop, and waits for the heated steam pressure to push the water through the coffee grounds. Magically, when all factors are just right, coffee then begins to flow through the dispensing column into the collecting chamber.

When done correctly, the moka pot delivers a rich, strong elixir worthy of any coffee barista or aficionado. However, when done incorrectly, the coffee is bitter and unappealing. For those trying to brew a worthy cup, there are several "tricks" to getting the right concoction. For example, a user may want to start with pre-heated water to ensure the best extraction. However, as a corollary, if too much heat is used, the device causes sputtering midway and until the end of the brew. The result is over-extraction and an acrid finish.

To avoid such a catastrophe, the user needs to "babysit" the pot and watch the flow rate of the coffee coming out, manually removing the coffee maker from the flame when the flow rate speeds up too much and put the coffee maker back when the flow rate slows down too much or stops altogether. This babysitting step is critical to the successful operation of the conventional moka pot.

Accordingly, a coffee maker solving these and other problems is desired.

A general non-limiting overview of practicing the present disclosure is presented below. The overview outlines exemplary practice of embodiments of the present disclosure, providing a constructive basis for variant and/or alternative and/or divergent embodiments, some of which are subsequently described.

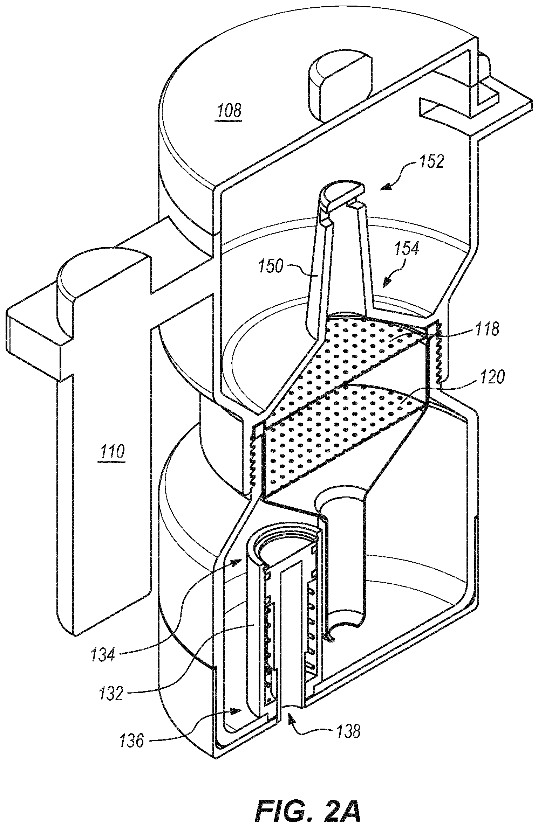

Figure 1 is a perspective view of an exemplary embodiment disclosed herein, showing the device in an exemplary working environment. In particular, Figure 1 illustrates a self-tending coffee maker 100 comprising a top pot 104, an opposing bottom pot 106, a cap 108 disclosed about the top pot 104, and a base 114 disclosed about the bottom pot 106. In use, the coffee maker 100 needs to be heated by a heat source, such as by a burner of a stovetop 102 seen in Figure 1. Figures 2A-2B illustrate an exemplary structure of the device seen in Figure 1, with Figures 3A-3D illustrating the device in operation.

Turning in detail to Figures 2A-2B, the coffee maker 100 further comprises a funnel 112 disposed between the top pot 104 and bottom pot 106, and a lifting means 116 for lifting the bottom pot 106 away from the base 114. The lifting means 116 comprises a pneumatically actuated piston 128 having a piston rod 130 extending from one end of the piston 128. The pneumatically actuated piston 128 is disposed within a piston chamber 132 cut within the bottom pot 106. The piston chamber 132 has a top end 134 and a bottom end 136. The top end 134 of the piston chamber 132 is sealed via O-rings. The bottom end 136 of the piston chamber 132 has an opening 138, wherein the piston chamber opening 138 is adapted to receive the piston rod 128. The pneumatically actuated piston 128 is slideably disposed within a piston sleeve 140 disposed with the piston chamber 132. A spring 142 having a biasing force is disposed between the piston sleeve 140 and the piston rod 130. A clip 144 maintains the piston 128 within sleeve 140.

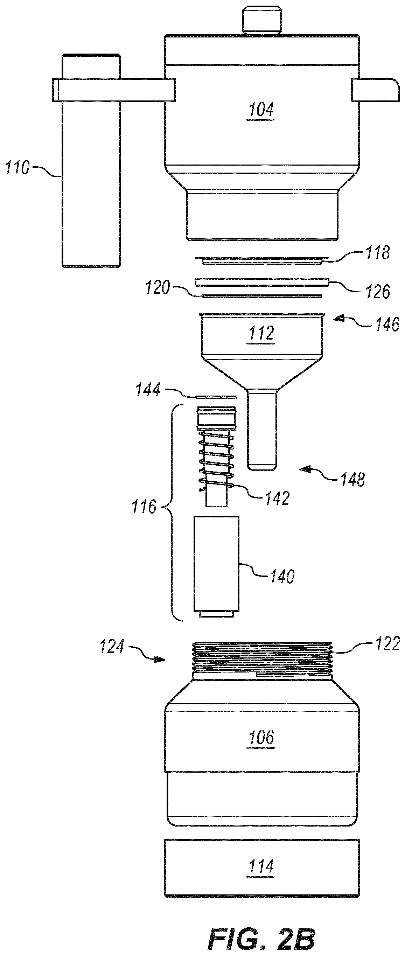

The top pot 104 preferably includes a handle 110 extending therefrom. The top pot 104 also includes a coffee outlet 150 having a top end 152 and an opposing bottom end 154. A top filter 118 and bottom filter 120 are disposed between the coffee outlet 150 and the funnel 112. The top filter 118 is disposed proximate to the bottom end 154 of the coffee outlet 150. An O-ring 126 is disposed between the top pot 104 and bottom pot 106 to ensure a good seal between the two 104, 106. Figure 2B illustrates the O-ring 126 is situated between the top filter 118 and the bottom filter 120.

In operation, as seen in Figures 3A-3D, the user typically begins by pouring water 158 into the interior chamber 160 of the bottom pot 106. The user then places coffee grounds 156 on top of the bottom filter 120 situated at the top of the funnel 112. As this funnel 112 is incapable of standing upright on its own, the user may need to use a holder or stand (not shown) to keep the funnel 112 upright during the coffee-loading process. After the coffee grounds 156 have been added, the user then joins the top pot 104 to the bottom pot 106 by rotating the top pot 104 about the threads 122 of the bottom pot 106 until the two pieces 104, 106 are seated together, as seen in Figure 3A. Next, the coffee maker 100 is placed onto the stovetop 102, which is turned on to start heating up the water 158. Figure 3A's pressure versus time graph illustrates an initial heating period wherein there is not enough pressure against the piston 128 to overcome the biasing force of the spring 142 pushing the piston 128 away from the base 114. Thus, as seen in Figure 3A, the piston 128 is not being pressed toward the base 114. Moreover, the water 158 is not yet being forced through funnel 112 toward the coffee grounds 156.

Figure 3B's pressure versus time graph illustrates how the pressure begins to ramp up dramatically inside the interior chamber 160 with additional heating over time. Such additional pressure forces the water 158 up into the funnel 112, past the bottom filter 120, and into the coffee grounds 156, creating the first instance of coffee 162 that is pushed through top filter 118 and then through coffee outlet 150 and into the top pot 104. At this point, the pressure inside the interior chamber 160 is not sufficient enough to overcome the biasing force of the spring 142 to begin to push the piston 128 toward the base 114.

Figure 3C's pressure versus time graph illustrates how the pressure has increased with further heating over the water 158 over time such that a critical pressure P_{c} has been reached. Such critical pressure P_{c} is when the pressure inside the interior chamber 160 is now sufficient enough to overcome the biasing force of the spring 142 to begin to push the piston 128 toward the base 114. Once the critical pressure P_{c} has been reached, additional time and hence pressure inside the interior chamber 160 continues to push the piston 128 toward the base 114 until the piston rod 130 passes through the opening 138 of the piston chamber 132 and eventually makes contact with the base 114. Figure 3C captures this instance in time wherein the lifting means 116 has done its job by lifting the bottom pot 106 away from the base 114 to create an air gap 166 between the two 106, 114. Such an air gap 166 effectively raises the bottom pot 106 away from the heat from the stovetop 102. This self-tending action of the coffee maker 100 has thus precluded the conventional coffee maker's over-pressurization as seen by the dashed line 164 in the pressure versus time graph of Figure 3C. It is this over-pressurization discussed above that makes the coffee bitter and unappealing. In contrast, due to the lifting means 116 employed here, desirous coffee 162 is illustrated in top pot 104.

Figure 3D's pressure versus time graph illustrates how the pressure has decreased over time with the disclosed invention, i.e., after the activation of the lifting means 116 has pushed the bottom pot 106 away from the base 114 and hence the heat from the stovetop 102. With the decrease in pressure inside the interior chamber 160, the biasing force of the spring 142 pushes the piston 128 back into the piston chamber 132. Doing so causes the bottom pot 106 to fall back down to the base 114. As there is no longer an air gap 166 between the bottom pot 106 and the base 114, the user then turns off the stovetop 102, as illustrated in Figure 3D. It can now be seen that with the disclosed invention, the user no longer needs to "babysit" the coffee maker. Since the user advantageously no longer needs to watch the flow rate of the coffee coming out to remove manually the coffee maker from the flame when the flow rate speeds up too much and conversely put the coffee maker back when the flow rate slows down too much or stops altogether, coffee maker 100 may further comprise a pressurized bell (not shown) or the like that sounds when the lifting means 116 has been activated.

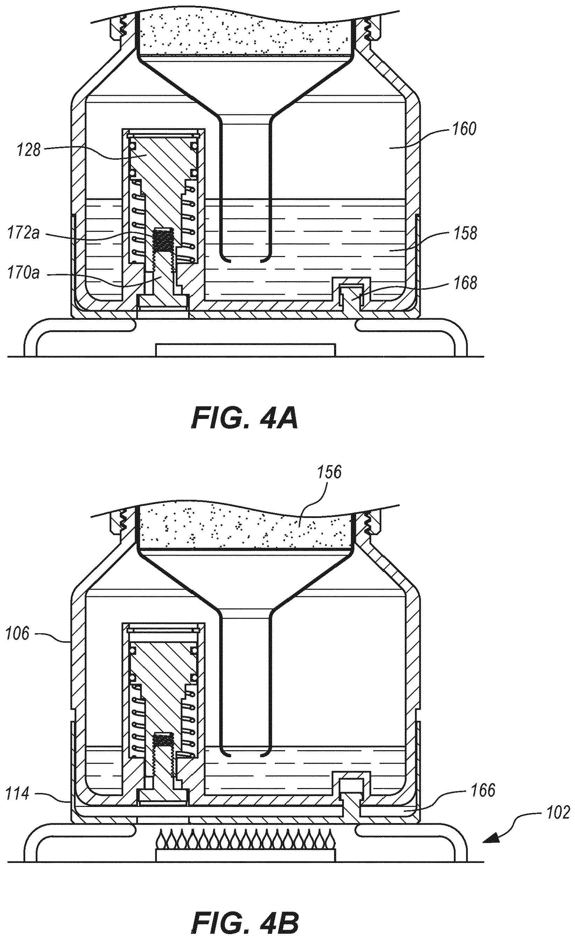

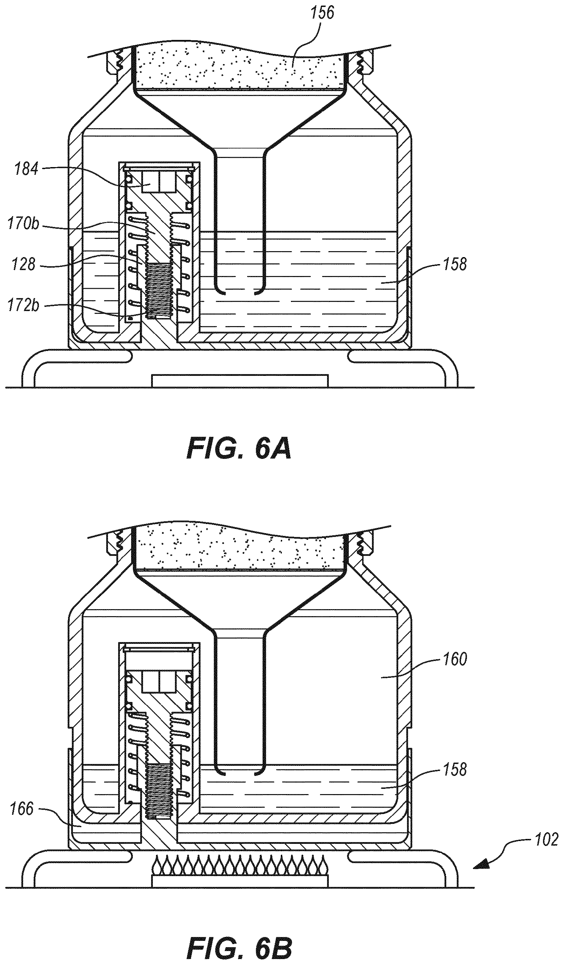

Figures 4A-4B show modifications to the device 100 seen in Figure 1, wherein Figure 4A illustrates the coffee maker 100 after the user has filled it with water 158 and coffee grounds 156, and wherein Figure 4B illustrates a point in time after the critical pressure P_{c} has been reached, i.e., after the lifting means 116 has been activated to push the bottom pot 106 away from the base 114 and thus create air gap 166 between the two 106, 114. As seen in Figures 4A-4B, the lifting means 116 further comprises an adjustment screw 170a in communication with the piston rod 130 for creating a pre-load setting against the spring 142. Adjustment screw 170a has threads 172a about a first threaded end, wherein the threads 172a are screwed into piston rod 130. The opposing end of the screw 170a has a head disposed about the underside of base 114. In this manner, a user may turn the head of the adjustment screw 170a in a clockwise motion to pre-load the spring 142 such that the critical pressure P_{c} is reached at a lower pressure than without the adjustment screw 170a. With this variant in structure, the coffee maker 100 also preferably includes a stopper 168 extending from the base 114 into a stopper chamber cut within the bottom pot 106. Stopper 168 ensures that the height of the air gap 166 is constant no matter the pre-load setting caused by the adjustment screw 170a. Instead of having the head of an adjustment screw about the base 114, Figures 6A-6B illustrate an alternative arrangement. Here, the adjustment screw is flipped around, i.e., the head of adjustment screw 170b is disposed at the top end 134 of the piston chamber 132, with the threads 172b disposed about the bottom end 136 of the piston chamber 132. With this configuration, adjustment screw 170b itself includes a stopper 184. Stopper 184 functions in the same manner as stopper 168 to ensure that the height of the air gap 166 is constant no matter the pre-load setting caused by the adjustment screw 170b.

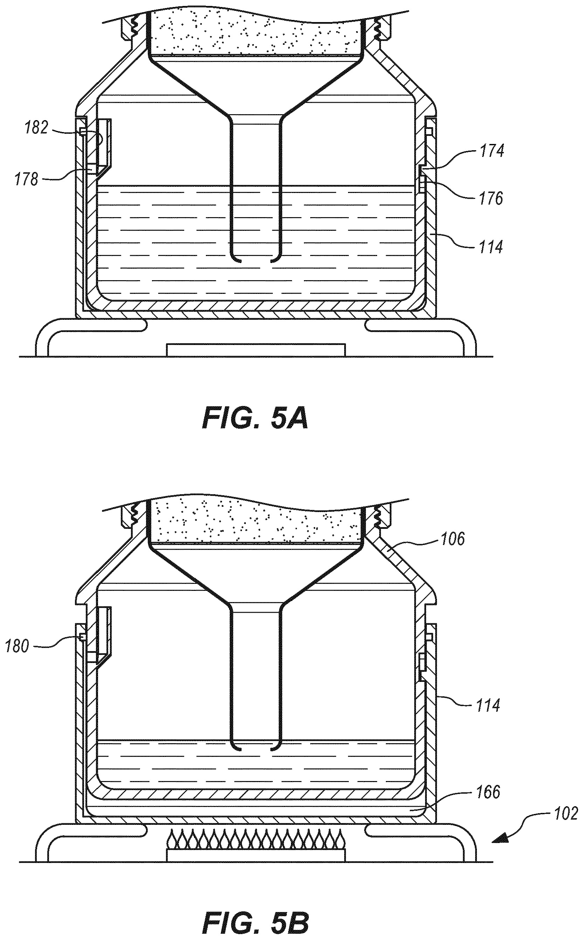

Figures 5A-5B illustrate the lifting means 116 in a "sealed-cup" arrangement. Figure 5A shows the coffee maker 100 after the user has filled it with water 158 and coffee grounds 156. Figure 5B illustrates a point in time after the critical pressure P_{c} has been reached, i.e., after the lifting means 116 has been activated to push the bottom pot 106 away from the base 114 and thus create air gap 166 between the two 106, 114. As seen in Figures 5A-5B, this lifting means 116 comprises a fill channel 178, a seal 180 in communication with the fill channel 178, and an inlet valve 182 cut into the bottom pot 106. The inlet valve 182 is also in communication with the fill channel 178 such that activation of the lifting means 116 creates an air gap 166 between the bottom pot 106 and the base 114. With this arrangement, the coffee maker 100 also comprises a stopper detent 174 disposed between the base 114 and the bottom pot 106. The stopper detent 174 extends from the base 114 toward the interior chamber 160 of the bottom pot 106. The bottom pot 106 has a corresponding stopper detent channel 176 configured to slideably receive the stopper detent 174. As the lifting means 116 has not yet been activated in Figure 5A, the stopper detent 174 is at the top of the stopper detent channel 176. Once the lifting means 116 has been activated as seen in Figure 5B, the stopper detent 174 is seated against the bottom of the stopper detent channel 176. Such stopper detent arrangement ensures the bottom pot 106 does not completely separate from the base 114, as well as ensure a certain height of the air gap 166. Such a stopper detent arrangement is binary in nature, namely, the stopper detent 174 is either at the top of the stopper detent channel 176 or the bottom thereof.

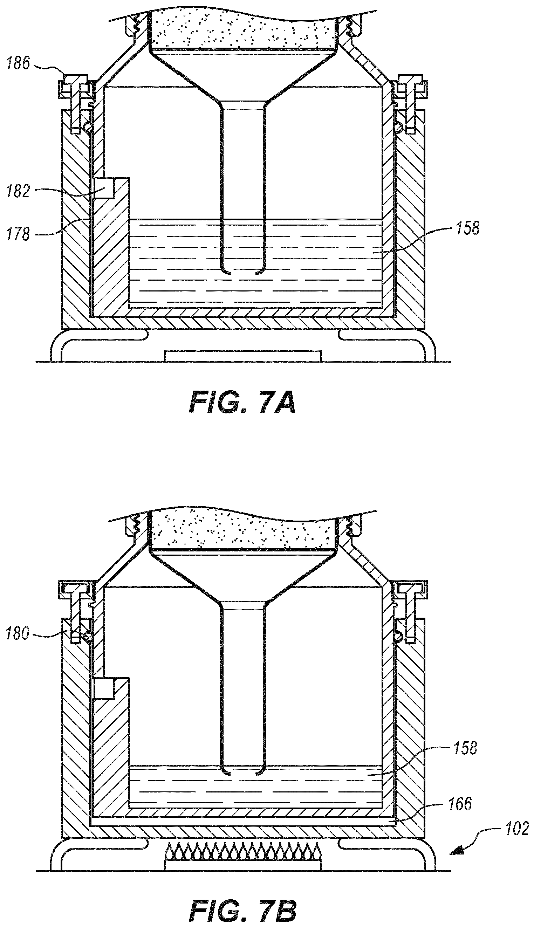

Figures 7A-7B, in contrast, show a variant of the structural arrangement of the coffee maker 100 illustrated in Figures 5A-5B wherein the stopper aspect is configured to be adjustable. Figure 7A show the device 100 after the user has filled it with water 158 and coffee grounds 156, whereas Figure 7B illustrates this coffee maker 100 in operation. Figure 7B particularly illustrates the point in time after the critical pressure P_{c} has been reached, i.e., after the lifting means 116 has been activated to push the bottom pot 106 away from the base 114 and thus create air gap 166 between the two 106, 114. As seen in Figures 7A-7B, this lifting means 116 comprises a fill channel 178, a seal 180 in communication with the fill channel 178, and an inlet valve 182 cut into the bottom pot 106. The inlet valve 182 is also in communication with the fill channel 178 such that activation of the lifting means 116 creates an air gap 166 between the bottom pot 106 and the base 114. An adjustable stopper 186 is disposed about the base 114 to fine tune the height of the air gap 166 once the lifting means 116 is engaged. Such an adjustable stopper 186 may comprise a pin having one end slideably configured to fit within a ring extending away from the bottom pot 106, as seen in Figure 7A or Figure 7B. Movement of the ring toward the base 114, or away from the base 114, will change the height of the air gap 166 to be smaller or higher, respectively.

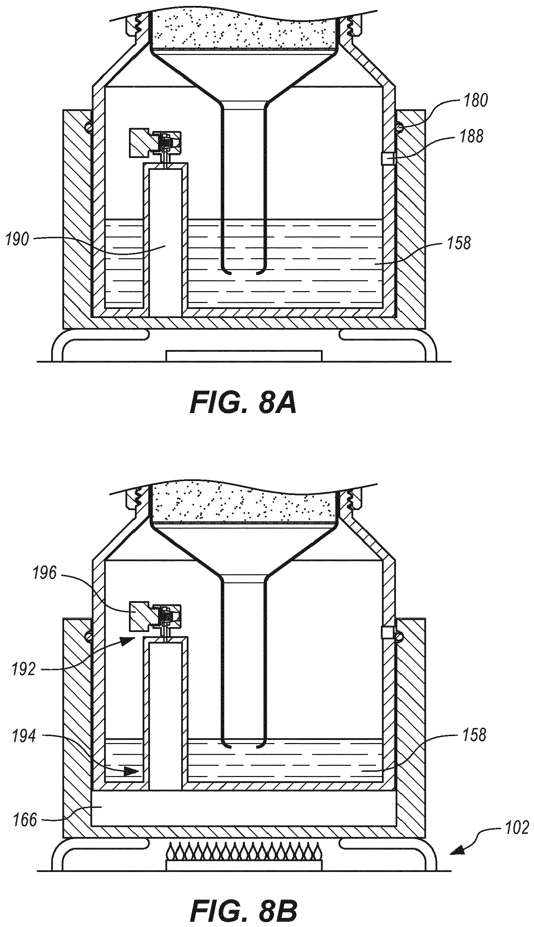

Figures 8A-8B illustrate an alternative structural arrangement to the devices seen in Figure 1 and Figures 5A-5B. Figure 8A shows this coffee maker 100 after the user has filled it with water 158 and coffee grounds 156, whereas Figure 8B illustrates this device 100 in operation. Figure 8B particularly illustrates the point in time after the critical pressure P_{c} has been reached, i.e., after the lifting means 116 has been activated to push the bottom pot 106 away from the base 114 and thus create air gap 166 between the two 106, 114. As seen in Figures 8A-8B, this lifting means 116 comprises a fill cavity 190 having a first end 192 and an opposing second end 194, a valve 196 in communication with the first end 192 of the fill cavity 190, and a seal 180 in communication with the second end 194 of the fill cavity 190. Activation of the lifting means 116 opens the valve 196 to permit pressurized air within the interior chamber 160 of the bottom pot 106 to create the air gap 166 between the bottom pot 106 and the base 114. An output opening 188 in communication with the fill cavity 190 releases excessive pressure within the interior chamber at a point when the output opening 188 cut within the bottom pot 106 passes the seal 180. Such release in excessive pressure causes the valve 196 to close, which action in turn causes the bottom pot 106 to fall back down to the base 114.

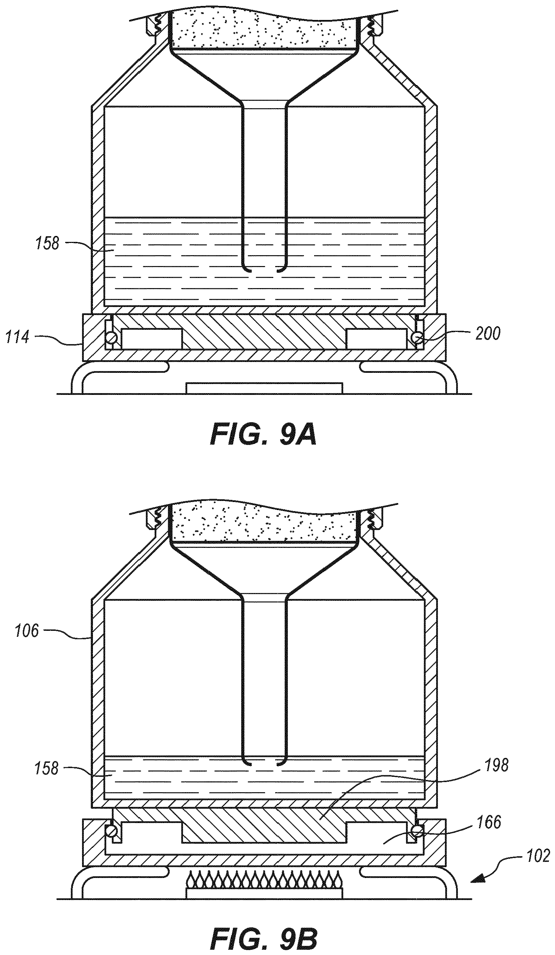

Figures 9A-9B illustrate an alternative embodiment, wherein the design is focused on being an add-on accessory to a conventional moka pot. Figure 9A shows this device after the user has filled it with water 158 and coffee grounds 156, whereas Figure 9B illustrates coffee maker 100 in operation. Figure 9B particularly illustrates the point in time after the lifting means 116 has been activated to push the bottom pot 106 away from the base 114 and thus create air gap 166 between the two 106, 114. As seen in Figures 9A-9B, this lifting means 116 comprises a pass-through conduction plate 198 and a seal 200. The plate 198 is fitted within the base 114, and the seal 200 is disposed between the plate 198 and the base 114. As the pass-through conduction plate 198 stops conducting when a certain temperature is reached, the plate 198 cools down to permit the bottom pot 106 to fall back onto the base 114.

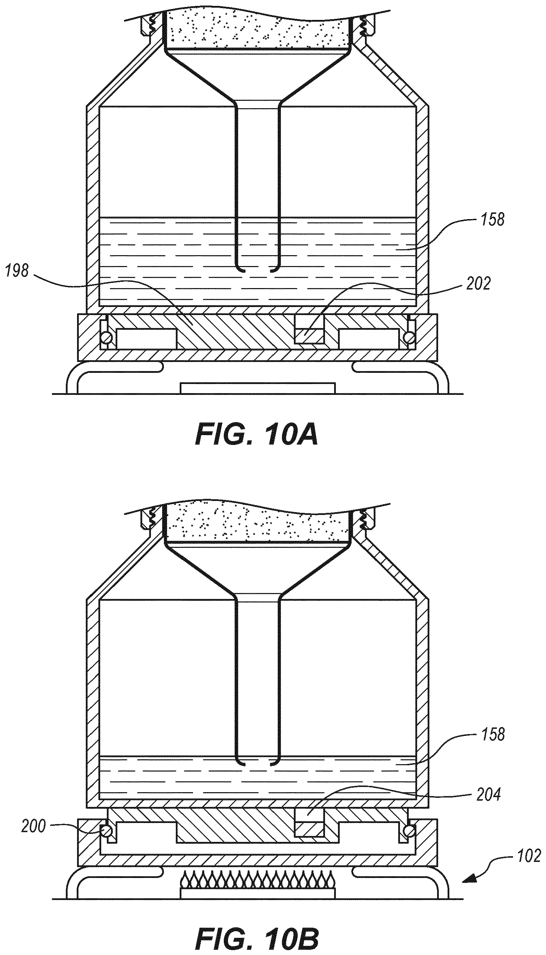

Figures 10A-10B illustrate an alternative structural arrangement to the device seen in Figures 9A-9B, wherein Figure 10A illustrates this device after the user has filled it with water 158 and coffee grounds 156, and wherein Figure 10B illustrates this device in operation. Here, an adjustable magnet 202 is disposed within a magnet channel cut within the plate 198. The adjustable magnet 202 is used to set the activation force of the lifting means 116. With this arrangement, the base 114 is ferromagnetic and the magnet 202 has sufficient heat resistance at the desired operating temperatures.

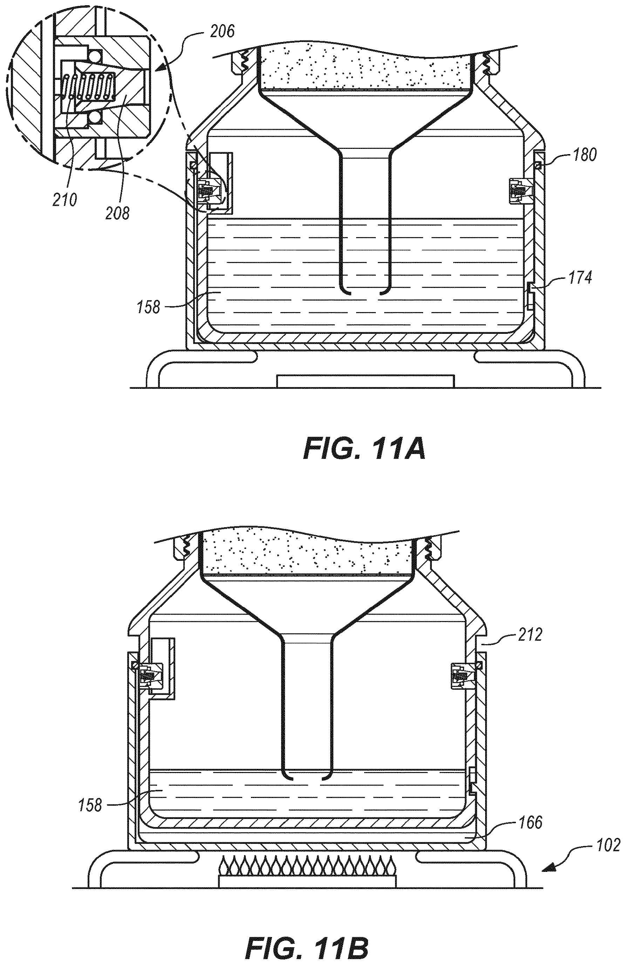

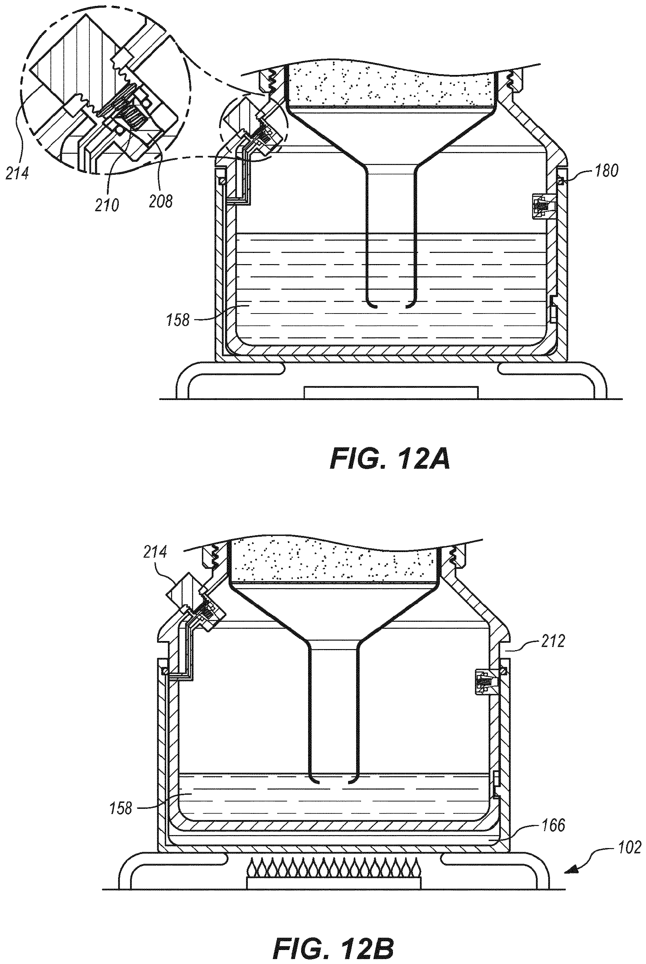

Figures 11A-11B show modifications to the device seen in Figures 5A-5B, wherein Figure 11A illustrates this device after the user has filled it with water 158 and coffee grounds 156, and wherein Figure 11B illustrates this device in operation. Figure 11B illustrates a point in time after the critical pressure P_{c} has been reached, i.e., after the lifting means 116 has been activated to push the bottom pot 106 away from the base 114 and thus create air gap 166 between the two 106, 114. As seen in Figures 11A-11B, this lifting means 116 comprises a fill channel 178, a seal 180 in communication with the fill channel 178, an inlet valve 182 cut into the bottom pot 106, and an air gate 206 in communication with the inlet valve 182. The air gate 206 has an open position and a closed position. Moreover, the air gate 206 comprises a depressible ram 208 having a spring 210 biasing the ram 208 into the closed position. Activation of the lifting means 116 means the critical pressure P_{c} within the interior chamber 160 is large enough to overcome the biasing force of the spring 210 such that the ram 208 retracts to place the air gate 206 into the open position. When the air gate 206 is in its open position, pressured air within the interior chamber 160 is permitted to flow through the inlet valve 182, through the air gate 206, and through the fill channel 178 to create air gap 166. With this arrangement, the bottom pot 106 includes an air return inlet 212 to permit air to enter back into the bottom pot 106 after activation of the lifting means 116 has caused the bottom pot 106 to be lifted far enough away from the base 114. Figures 12A-12B show modifications to the device seen in Figures 11A-11B. In particular, one air gate 206 has a rotatable screw 214 in communication with the depressible ram 208 to adjust when the lifting means 116 may be activated.

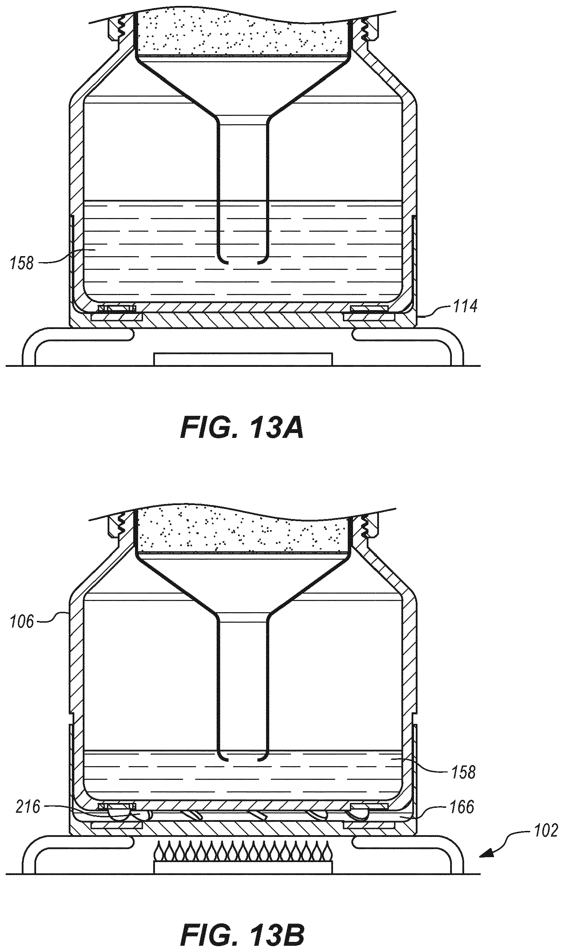

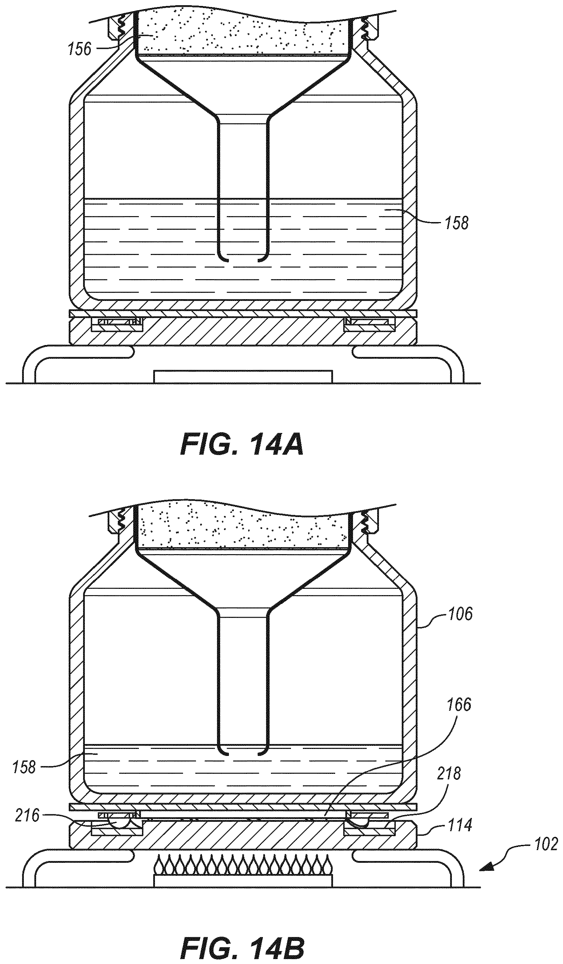

Figures 13A-13B illustrate an alternative embodiment, wherein Figure 13A shows this device after the user has filled it with water 158 and coffee grounds 156, and Figure 13B illustrates coffee maker 100 in operation. Figure 13B particularly illustrates the point in time after the lifting means 116 has been activated to push the bottom pot 106 away from the base 114 and thus create air gap 166 between the two 106, 114. As seen in Figures 13A-13B, this lifting means 116 comprises a shape memory alloy 216 disposed between the bottom pot 106 and the base 114. This shape memory alloy 216 deforms at a temperature where it will physically push the bottom pot 106 away from the base 114 and hence away from the heat source 102. Figures 14A-14B show modifications to the device seen in Figures 13A-13B, wherein the design is focused on being an add-on accessory to a conventional moka pot. This coffee maker 100 further comprises heat insulation 218, such as a ceramic liner, to avoid the alloy 216 from becoming too hot during operation.

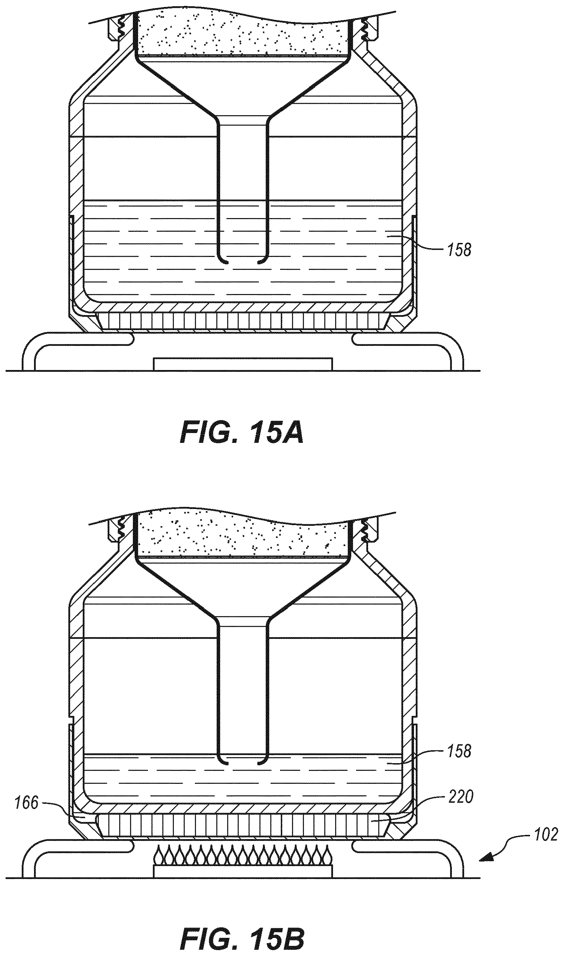

Figures 15A-15B illustrate an alternative embodiment wherein Figure 15A illustrates this device after the user has filled it with water 158 and coffee grounds 156, and Figure 15B illustrates this device in operation. Figure 15B particularly illustrates the point in time after the lifting means 116 has been activated to push the bottom pot 106 away from the base 114 and thus creates air gap 166 between the two 106, 114. As seen in Figures 15A-15B, this lifting means 116 comprises a portion 220 of the base 114 having a higher thermal expansion coefficient material compared to material comprising the bottom pot 106. This portion 220 deforms at a temperature where it will physically push the bottom pot 106 away from the base 114 and hence away from the heat source 102.

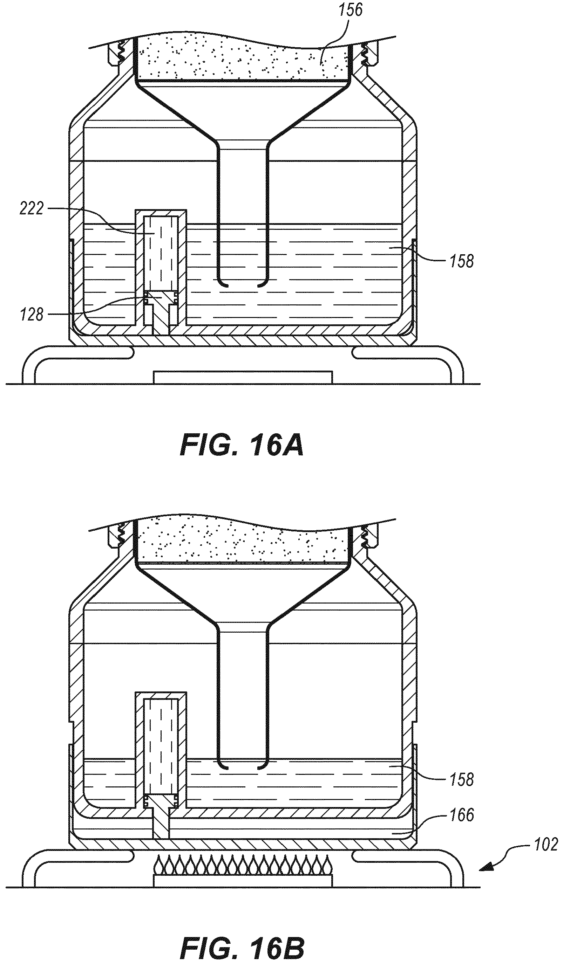

Figures 16A-16B illustrate an alternative structural arrangement to the device seen in Figure 1. Figure 16A shows this coffee maker 100 after the user has filled it with water 158 and coffee grounds 156, whereas Figure 16B illustrates this device 100 in operation. Figure 16B particularly illustrates the point in time after the lifting means 116 has been activated to push the bottom pot 106 away from the base 114 and thus create air gap 166 between the two 106, 114. As seen in Figures 16A-16B, this lifting means 116 comprises a hermetically sealed gas cavity 222 within the bottom pot 106, wherein the piston 128 is in communication with one end of the cavity 222 and the base 114. Activation of the lifting means 116 is caused by the increased pressure within the gas cavity 222 during heating. Such internal pressure pushes the piston 128 toward the base 114 to create an air gap 166 between the bottom pot 106 and the base 114.

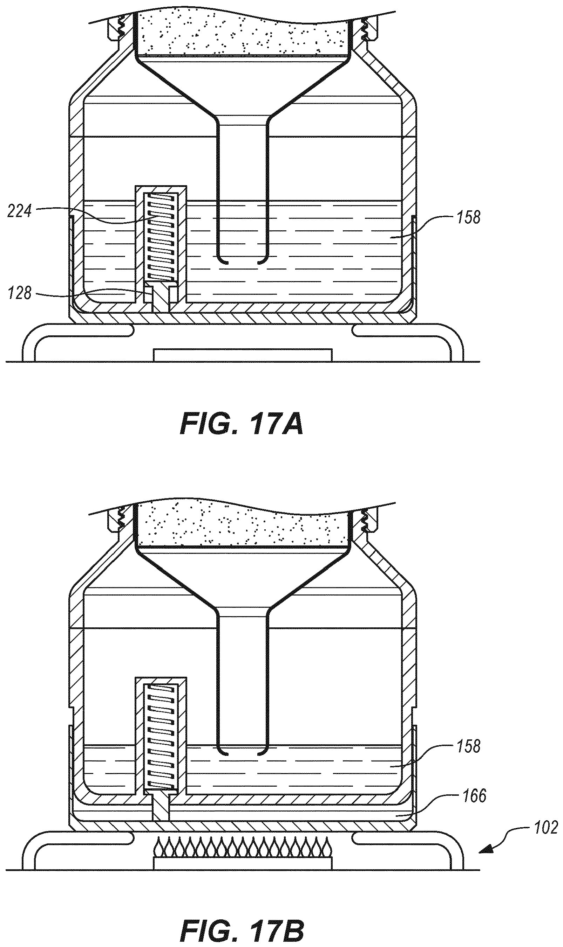

Figures 17A-17B show a structural arrangement similar to the device seen in Figures 16A-16B. Figure 17A shows this coffee maker 100 after the user has filled it with water 158 and coffee grounds 156, whereas Figure 17B illustrates this device 100 in operation. Figure 17B particularly illustrates the point in time after the lifting means 116 has been activated to push the bottom pot 106 away from the base 114 and thus create air gap 166 between the two 106, 114. As seen in Figures 17A-17B, this lifting means 116 comprises a cavity, such as cavity 222, within the bottom pot, a bi-metal spring 224 enclosed within the cavity, and a piston 128 in communication with the cavity and the base 114. The cavity has a first end and an opposing second end, wherein the bi-metal spring 224 is disposed between the first end of the cavity and the piston 128. Activation of the lifting means 116 is caused by deformation of the bi-metal spring 224 within the cavity during heating. Such deformation pushes the piston 128 toward the base 114 to create an air gap 166 between the bottom pot 106 and the base 114.

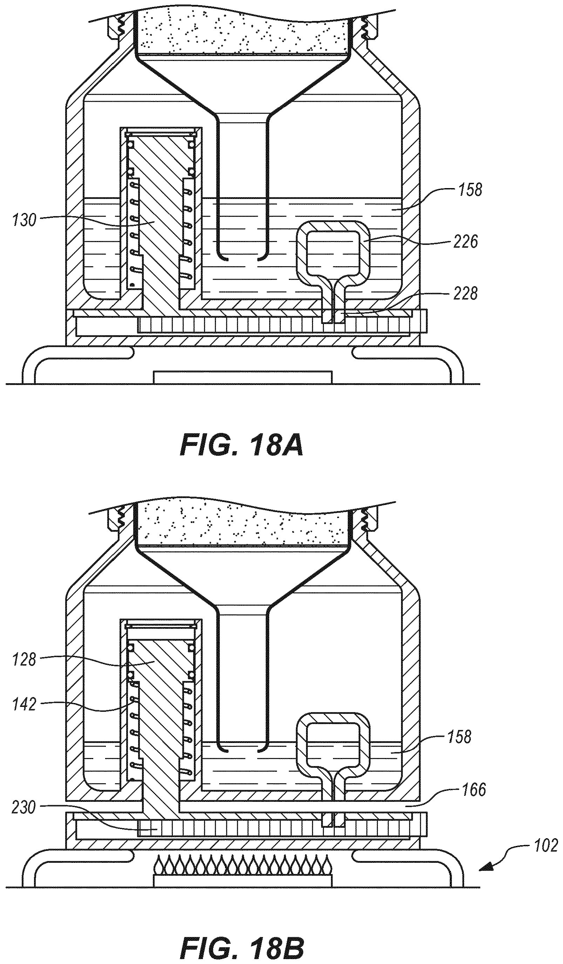

Figures 18A-18B illustrate an alternative embodiment, wherein Figure 18A illustrates this device after the user has filled it with water 158 and coffee grounds 156, and wherein Figure 18B illustrates this device in operation. Figure 18B particularly illustrates a point in time after the critical pressure P_{c} has been reached, i.e., after the lifting means 116 has been activated to push the bottom pot 106 away from the base 114 and thus create air gap 166 between the two 106, 114. As seen in Figures 18A-18B, this lifting means 116 comprises a cavity within the bottom pot 106, and a piston 128 with spring 142 in communication with the cavity and the base 114. This coffee maker 100 further comprises a heating element 226 disposed within the bottom pot 106. The heating element 226 is in electrical communication with a power element 228 in the base 114. Activation of the lifting means 116 pushes the bottom pot 106 away from the base 114 to create an air gap 166 between the bottom pot 106 and the base 114 and also stop electrical communication between the heating element 226 and the base 114.

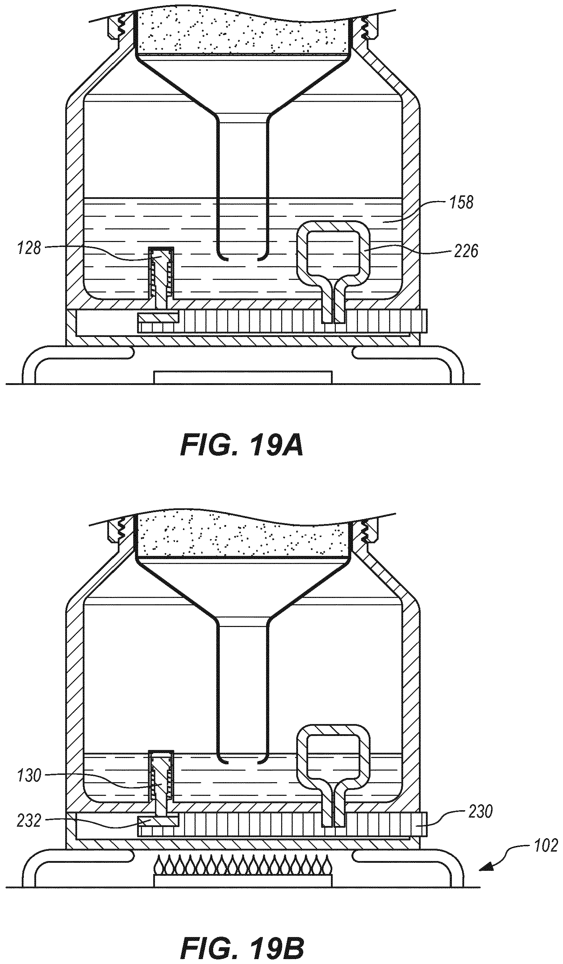

Figures 19A-19B illustrate an alternative structural arrangement to the device seen in Figure 1, wherein Figure 19A illustrates this device after the user has filled it with water 158 and coffee grounds 156, and wherein Figure 19B illustrates this device in operation. Figure 19B particularly illustrates a point in time after the critical pressure P_{c} has been reached, i.e., after the lifting means 116 has been activated to push the bottom pot 106 away from the base 114 and thus create air gap 166 between the two 106, 114. This coffee maker 100 further comprises a heating element 226 disposed within the bottom pot 106. The heating element 226 is in electrical communication with a power element 228 in the base 114. The power element 228 is turned off by way of a trigger switch 232. Here, the lifting means 116 comprises a cavity within the bottom pot 106, and a spring-biased piston 128 in communication with the cavity and the trigger switch 232. Activation of the lifting means 116 engages the trigger switch 232 to stop power being provided to the heating element 226.

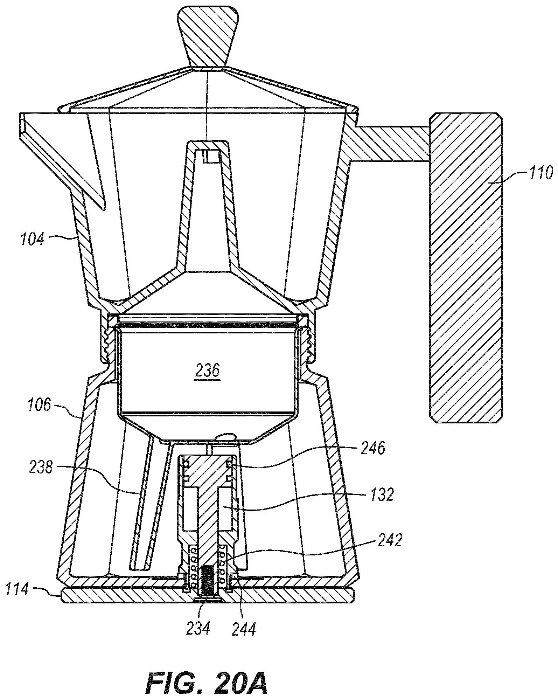

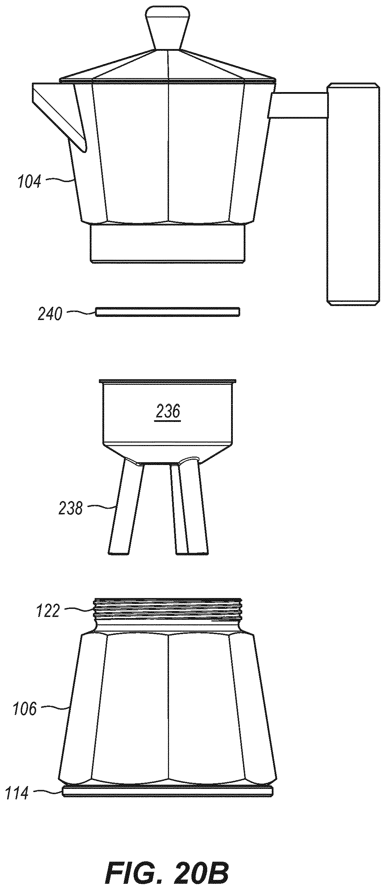

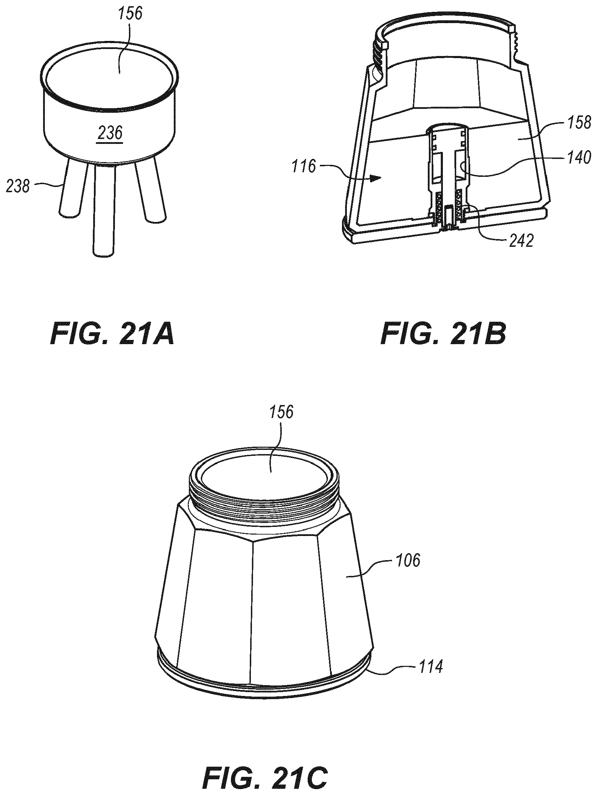

Figures 20A-20B illustrate another exemplary embodiment disclosed herein, wherein Figures 21A-21H show the device seen in Figures 20A-20B in operation. This self-tending coffee maker 100 comprises a top pot 104, an opposing bottom pot 106, a cap 108 disposed about the top pot 104, and a base 114 disposed about the bottom pot 106. Turning in detail to Figures 20A-20B, the coffee maker 100 further comprises a funnel 236 disposed between the top pot 104 and bottom pot 106. Funnel 236 has at least two legs 238. Coffee maker 100 further includes a lifting means 116 for lifting the bottom pot 106 away from the base 114. The lifting means 116 comprises a pneumatically actuated piston having a piston rod extending therefrom and retaining screw 234 in communication with the piston rod. The pneumatically actuated piston is disposed within a piston chamber 132 cut within the bottom pot 106. The piston chamber 132 has a top end and a bottom end. The top end of the piston chamber 132 is sealed via O-rings 246. The bottom end 136 of the piston chamber 132 has an opening adapted to receive the piston rod. The pneumatically actuated piston is slideably disposed within a piston sleeve disposed with the piston chamber 132. A spring 242 having a biasing force is disposed between the piston sleeve and the piston rod. The retaining screw 234 creates a pre-load setting against the spring 242. A seal ring 244 is disposed about the retaining screw 234.

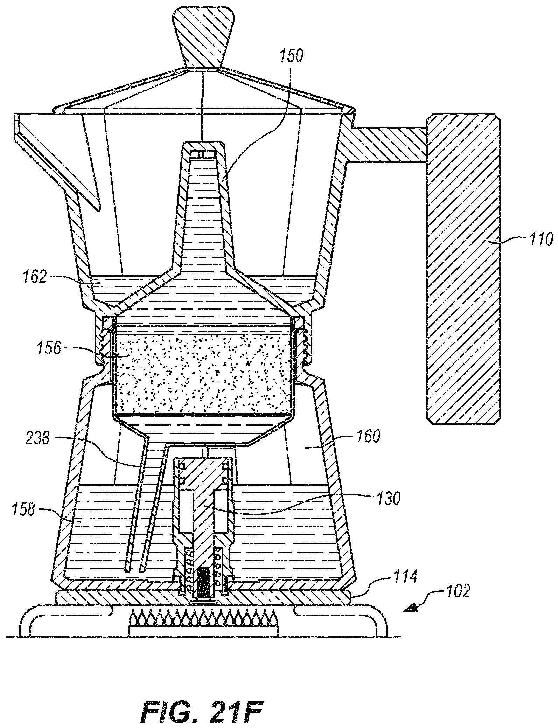

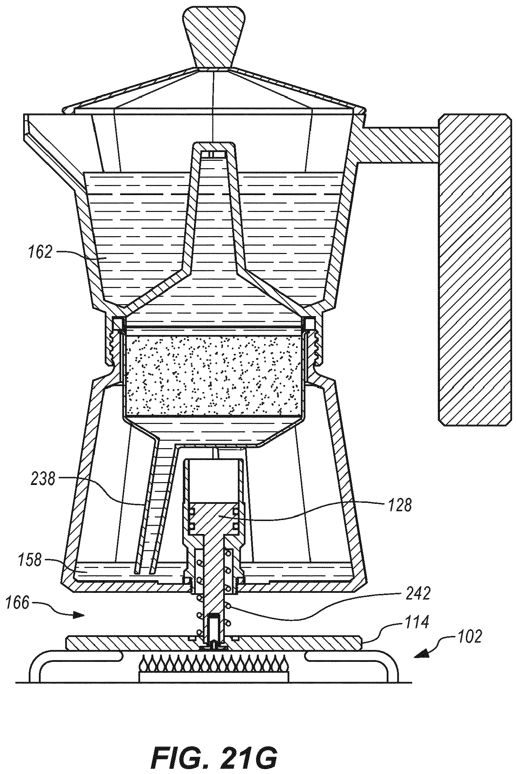

Spring 242 may be tuned such that the lifting means 116 is activated when the pressure in the interior chamber of the bottom pot 106 reaches 0.1 bar to 1.5 bar, an ideal range for brewing the perfect coffee. Exemplary numbers are the following: (1) in an "up" state without water or coffee grounds, the invention 100 may weigh 792 g; O-rings 246 may create resistance equating to 50 g; and spring 242 may create resistance equating to -850 g, wherein the overall effect is that of -8 g; (2) in a "down" state with water and coffee grounds (see, e.g., Figure 21F), the invention 100 may weigh 792 g; O-rings 246 may create resistance equating to 50 g; coffee grounds 156 may weigh 20 g; water 156 may weigh 250 g; and spring 242 may create resistance equating to -850 g, wherein the overall effect is that of 262 g; and (3) in a "up" state with water and coffee grounds (see, e.g., Figure 21G), the invention 100 may weigh 792 g; O-rings 246 may create resistance equating to 50 g; coffee grounds 156 may weigh 20 g; water 156 may weigh 250 g; spring 242 may create resistance equating to -850 g; and a piston diameter of 1.7 cm may create resistance equating to -277 g, wherein the overall effect is that of 15 g.

The top pot 104 preferably includes a handle extending therefrom. The top pot 104 also includes a coffee outlet having a top end and an opposing bottom end. A top mesh 240 is disposed between the coffee outlet and the funnel 236. The top mesh 240 is disposed proximate the bottom end of the coffee outlet. A gasket is disposed between the top pot 104 and bottom pot 106 to ensure a good seal between the two 104, 106.

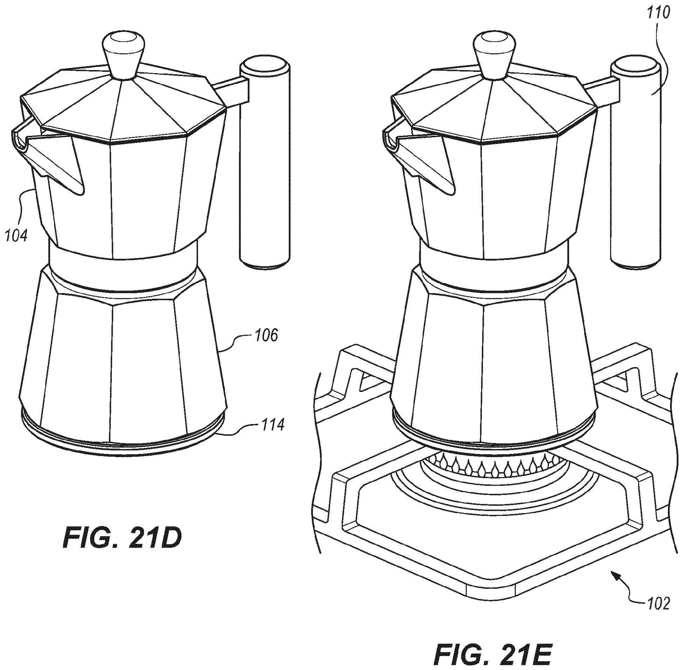

In operation, as seen in Figures 21A-21H, the user begins by placing coffee grounds 156 into funnel 236, which advantageously has legs 238 and is thus capable of standing upright on its own. After the coffee grounds 156 have been added, the user then pours water 158 into the interior chamber of the bottom pot 106. Next, the user puts the funnel 236 into the bottom pot 106 and joins the top pot 104 to the bottom pot 106 by rotating the top pot 104 about the threads of the bottom pot 106 until the two pieces 104, 106 are seated together, as seen in Figure 21D. Next, the coffee maker 100 is placed onto the stovetop 102, which is turned on to start heating up the water 158, as seen in Figure 21E. During the initial heating period, there is not enough pressure against the piston to overcome the biasing force of the spring 242 pushing the piston away from the base 114, even with the pre-load created by the retaining screw 234. However, there is enough pressure inside the interior chamber of the bottom pot 106 to force the water 158 through the hollow legs 238 of funnel 238, and then through coffee grounds 156, wherein coffee 162 is output through the coffee outlet and into the top pot 104, as seen in Figure 21F.

With increased time of the device 100 over the heat source 102, the pressure increases until a critical pressure P_{c} has been reached. Such critical pressure P_{c} is when the pressure inside the interior chamber is now sufficient enough to overcome the biasing force of the spring 242 to begin to push the piston toward the base 114. Once the critical pressure P_{c} has been reached, additional time and hence pressure inside the interior chamber continues to push the piston toward the base 114 until the piston rod, via the adjustment screw 234, pushes against the base 114. Figure 21G captures the instance in time wherein the lifting means 116 has done its job by lifting the bottom pot 106 away from the base 114 to create an air gap 166 between the two 106, 114. Such an air gap 166 effectively raises the bottom pot 106 away from the heat of the stovetop 102 to preclude a bitter and unappealing cup of coffee.

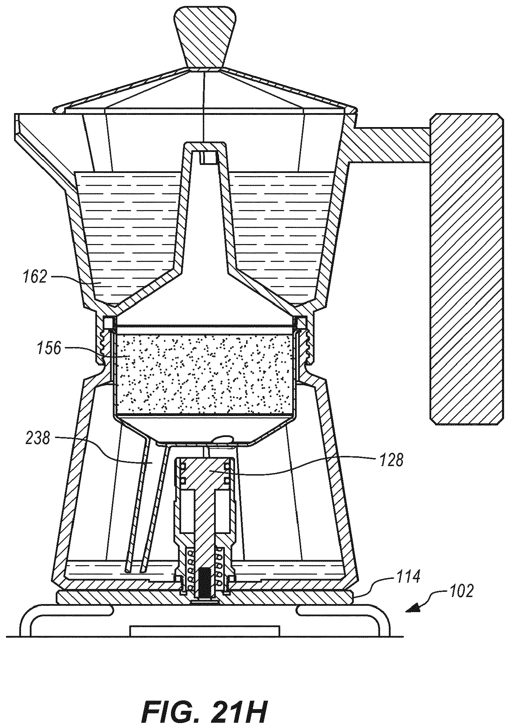

Figure 21H illustrates how the resultant decrease in pressure inside the interior chamber permits the biasing force of spring 242 to push the piston back into the piston chamber 132. Doing so causes the bottom pot 106 to fall back down to the base 114. As there is no longer an air gap 166 between the bottom pot 106 and the base 114, the user then turns off the stovetop 102 and finishes by pouring a delicious cup of coffee. The coffee perhaps even tastes better to the user as the user revels in the fact that there was no need to "babysit" the entire process.

While certain embodiments have been described, the embodiments have been presented by way of example only and are not intended to limit the scope of the inventions. Indeed, the novel grinding device described herein may be embodied in a variety of other forms. Furthermore, various omissions, substitutions, and changes in the form of the disclosed elements may be made without departing from the spirit of the inventions. The accompanying claims and their equivalents are intended to cover such forms or modifications as would fall within the scope and spirit of the inventions.

## Claims

1. A coffee maker (100) comprising:
a top pot (104);
a bottom pot (106) opposing the top pot;
a funnel (112) disposed between the top pot and bottom pot;
a base (114) disposed about the bottom pot; and
a lifting means (116) for lifting the bottom pot (106) away from the base (114).

2. The coffee maker of claim 1, wherein the lifting means (116) comprises a pneumatically actuated piston (128) disposed within a piston chamber (132) cut within the bottom pot, wherein the piston chamber has a top end (134) and a bottom end (136), wherein the bottom end of the piston chamber has an opening (138), and wherein the piston chamber opening is adapted to receive a piston rod (130) extending from one end of the piston.

3. The coffee maker of claim 2, wherein the lifting means (116) is activated at a critical pressure inside the bottom pot wherein pressure against the piston (128) overcomes the biasing force of a spring (142) disposed between the piston sleeve and the piston rod, wherein the lifting means causes the piston rod to push downward against the base to create an air gap (166) between the bottom pot (106) and the base (114).

4. The coffee maker of claim 1, further comprising an adjustable stopper (186) disposed about the base, wherein the lifting means comprises a fill channel (178), a seal (180) in communication with the fill channel, and an inlet valve (182) cut into the bottom pot and in communication with the fill channel, wherein activation of the lifting means creates an air gap (166) between the bottom pot and the base, wherein the air gap is in communication with the fill channel, and wherein the adjustable stopper limits how far the bottom pot is lifted away from the base during activation.

5. The coffee maker of claim 1, further comprising an output opening (188) cut into the bottom pot (106), wherein the lifting means comprises a fill cavity (190) having a first end (192) and an opposing second end (194), a valve (196) in communication with the first end (192) of the fill cavity, and a seal (180) in communication with the second end (194) of the fill cavity, wherein activation of the lifting means opens the valve to create an air gap (166) between the bottom pot and the base, and wherein the air gap is in communication with the fill cavity (190) and the output opening (188).

6. The coffee maker of claim 1, wherein the lifting means comprises a conduction plate (198) and a seal (200), wherein the plate is fitted within the base (114), and wherein the seal is disposed between the plate and the base, wherein activation of the lifting means creates an air gap between the bottom pot and the base.

7. The coffee maker of claim 1, further comprising a stopper detent (174) disposed between the base and the bottom pot, wherein the lifting means comprises a fill channel (178), a seal (180) in communication with the fill channel, and an inlet valve (182) cut into the bottom pot and in communication with the fill channel, wherein activation of the lifting means creates an air gap (166) between the bottom pot and the base, and wherein the air gap is in communication with the fill channel, further comprising an air gate (206) in communication with the inlet valve, wherein the air gate has an open position and a closed position, wherein the air gate comprises a depressible ram (208) having a spring (210) biasing the ram into the closed position, wherein activation of the lifting means places the air gate (206) into the open position to create the air gap, and wherein the bottom pot includes an air return inlet to permit air to enter back into the bottom pot after activation of the lifting means.

8. The coffee maker of claim 7, wherein the air gate (206) has a rotatable screw (214) in communication with the depressible ram (208) to adjust when the lifting means may be activated.

9. The coffee maker of claim 1, wherein the lifting means comprises a portion of the base (114) comprising either a memory alloy disposed between the bottom pot and the base or a portion of the base having a higher thermal expansion coefficient material compared to material comprising the bottom pot, wherein activation of the lifting means creates an air gap between the bottom pot and the base.

10. The coffee maker of claim 1, wherein the lifting means comprises a hermetically sealed gas cavity (222) within the bottom pot (106), and a piston (128) in communication with one end of the cavity and the base, wherein activation of the lifting means (116) pushes the piston toward the base to create an air gap (166) between the bottom pot and the base.

11. The coffee maker of claim 1, wherein the lifting means (116) comprises a cavity within the bottom pot, a bi-metal spring (224) enclosed within the cavity, and a piston (128) in communication with the cavity and the base, wherein the cavity has a first end and an opposing second end, wherein the bi-metal spring is disposed between the first end of the cavity and the piston, wherein activation of the lifting means pushes the bottom pot away from the base to create an air gap between the bottom pot and the base.

12. The coffee maker of claim 1, further comprising a heating element (226) disposed within the bottom pot, wherein the heating element is in electrical communication with a power element (228) in the base, wherein the lifting means comprises a cavity within the bottom pot, and a spring-biased piston in communication with the cavity and the base, wherein activation of the lifting means pushes the bottom pot away from the base to create an air gap (166) between the bottom pot and the base and stops electrical communication between the heating element and the base.

13. The coffee maker of claim 1, further comprising a heating element (226) disposed within the bottom pot, wherein the heating element is in electrical communication with a power element (228) having a trigger switch (232) in the base, wherein the lifting means comprises a cavity within the bottom pot, and a spring-biased piston in communication with the cavity and the trigger switch, wherein activation of the lifting means pushes the bottom pot away from the base to create an air gap between the bottom pot and the base and engages the trigger switch to stop power being provided to the heating element.

14. The coffee maker of claim 3, wherein the lifting means further comprises a retaining screw (234) in communication with the piston rod (130) for creating a pre-load setting against the spring (142), wherein the retaining screw is coupled to the base.

15. The coffee maker of claim 14 , wherein the funnel (112) includes at least two legs (238) in communication with the top pot (104).

## Amended claims

### Amended claims in accordance with Rule 137(2) EPC.

1. A coffee maker (100) comprising:
a top pot (104);
a bottom pot (106) opposing the top pot;
a funnel (112) disposed between the top pot and bottom pot;
a base (114) disposed about the bottom pot; and
a lifting means (116), **characterized in that** the lifting means lifts the bottom pot (106) away from the base (114) to create an air gap (166) between the bottom pot (106) and the base (114) when the lifting means (116) is activated at a critical pressure inside the bottom pot (106).

2. A coffee maker (100) according to claim 1, wherein the lifting means (116) comprises a pneumatically actuated piston (128) disposed within a piston chamber (132) cut within the bottom pot, wherein the piston chamber has a top end (134) and a bottom end (136), wherein the bottom end of the piston chamber has an opening (138), and wherein the piston chamber opening is adapted to receive a piston rod (130) extending from one end of the piston.

3. A coffee maker (100) according to claim 2, wherein the piston (128) is slidably disposed within a piston sleeve (140) disposed within the piston chamber (132), and further comprising a spring (142) having a biasing force disposed between the piston sleeve (140) and a piston rod (130) and wherein the lifting means (116) once activated at the critical pressure to overcome the biasing force of the spring (142) the piston rod (130) pushes downwardly against the base (114) to create the air gap (166).

4. A coffee maker (100) according to claim 3, wherein the lifting means (116) further comprises a retaining screw (234) in communication with the piston rod (130) for creating a pre-load setting against the spring (142), wherein the retaining screw is coupled to the base (114).

5. A coffee maker (100) according to any preceding claim, wherein the funnel (112) includes at least two legs (238) in fluid communication with the top pot (104) by way of a coffee outlet (150) disposed within the top pot.

6. A coffee maker (100) according to claim 1, and further comprising an adjustable stopper (186) disposed about the base (114), wherein the lifting means (116) comprises a fill channel (178), a seal (180) in communication with the fill channel, and an inlet valve (182) cut into the bottom pot (106) and in communication with the fill channel (178), wherein activation of the lifting means (116) creates the air gap (166), wherein the air gap is in communication with the fill channel (178), and wherein the adjustable stopper (186) limits how far the bottom pot (106) is lifted away from the base (114) during activation.

7. A coffee maker (100) according to claim 6, and further comprising a stopper detent (174) disposed between the base (114) and the bottom pot (106).

8. A coffee maker (100) according to claim 6 or 7, and further comprising an air gate (206) in communication with the inlet valve (182), wherein the air gate (206) has an open position and a closed position, the air gate comprising a depressible ram (208) having a spring (210) biasing the ram into the closed position, wherein activation of the lifting means (116) places the air gate (206) into the open position to create the air gap (166), and wherein the bottom pot (106) includes an air return inlet (212) to permit air to enter back into the bottom pot (106) after activation of the lifting means (166).

9. A coffee maker (100) according to claim 8, wherein the air gate (206) has a rotatable screw (214) in communication with the depressible ram (208) to adjust when the lifting means (116) may be activated.

10. A coffee maker (100) according to claim 1, and further comprising an output opening (188) cut into the bottom pot (106), wherein the lifting means (116) comprises a fill cavity (190) having a first end (192) and an opposing second end (194), a valve (196) in communication with the first end (192) of the fill cavity, and a seal (180) in communication with the second end (194) of the fill cavity, wherein activation of the lifting means (116) opens the valve to create the air gap (166), and wherein the air gap is in communication with the fill cavity (190) and the output opening (188).

11. A coffee maker (100) according to claim 1, wherein the lifting means (116) comprises a conduction plate (198) and a seal (200), wherein the plate is fitted within the base (114), and wherein the seal (200) is disposed between the conduction plate (198) and the base (114), wherein activation of the lifting means (116) creates the air gap.

12. A coffee maker (100) according to claim 1, wherein the lifting means (116) comprises a portion of the base (114) comprising either a memory alloy (216) disposed between the bottom pot (106) and the base (114) or a portion of the base having a higher thermal expansion coefficient material (220) compared to material comprising the bottom pot (106), wherein activation of the lifting means (116) creates the air gap (166).

13. A coffee maker (100) according to claim 1, wherein the lifting means (116) comprises a hermetically sealed gas cavity (222) within the bottom pot (106), and a piston (128) in communication with one end of the gas cavity (222) and the base (114), wherein activation of the lifting means (116) pushes the piston (128) toward the base (114) to create the air gap (166).

14. A coffee maker (100) according to claim 1, wherein the lifting means (116) comprises a cavity within the bottom pot (106), a bi-metal spring (224) enclosed within the cavity, and a piston (128) in communication with the cavity and the base (114), wherein the cavity has a first end and an opposing second end, wherein the bi-metal spring is disposed between the first end of the cavity and the piston, wherein activation of the lifting means (116) pushes the bottom pot (106) away from the base to create the air gap (166) .

15. A coffee maker (100) according to claim 1, further comprising a heating element (226) disposed within the bottom pot (106), wherein the heating element (226) is in electrical communication with a power element (228) in the base (114), wherein the lifting means (116) comprises a cavity within the bottom pot (106), and a spring-biased piston (128) in communication with the cavity and the base (114), wherein activation of the lifting means (116) pushes the bottom pot (106) away from the base (114) to create the air gap (166) and serving to stop electrical communication between the heating element (226) and the base (114).
